# EUROPÄISCHE PATENTSCHRIFT

(11) **EP 3 294 593 B1**
(45) Veröffentlichungstag und Bekanntmachung des Hinweises auf die Patenterteilung: **21.10.2020**
(21) Anmeldenummer: 16722871.7
(22) Anmeldetag: 11.05.2016
(51) Int. Cl.: B60R 25/24

(54) **ZUGANGS- UND FAHRBERECHTIGUNGSSYSTEM MIT ERHÖHTER SICHERHEIT GEGEN RELAISANGRIFFE AUF DIE TRANSPONDINGSCHNITTSTELLE**
ACCESS AND DRIVING AUTHORIZATION SYSTEM WITH IMPROVED SECURITY AGAINST RELAY ATTACKS DIRECTED TO THE TRANSPONDER INTERFACE
SYSTÈME D'AUTORISATION D'ACCÈS ET DE CONDUITE À SÉCURITÉ ACCRUE CONTRE DES ATTAQUES EN RELAIS CONTRE L'INTERFACE DE TRANSPONDEUR

(30) Priorität: 15.05.2015 DE 102015107643
(43) Veröffentlichungstag der Anmeldung: 21.03.2018
(73) Patentinhaber: HELLA GmbH & Co. KGaA, 59552 Lippstadt (DE)
(72) Erfinder: WEGHAUS, Ludger, 59556 Lippstadt (DE)
(86) Internationale Anmeldenummer: PCT/EP2016/060563
(87) Internationale Veröffentlichungsnummer: WO 2016/184751

(56) Entgegenhaltungen:
- EP-A1- 1 721 792
- EP-A1- 1 721 793
- US-A1- 2014 375 423

## Beschreibung

Die Erfindung betrifft ein Authentifikationselement, insbesondere Keyless-Go-Mittel für ein Fahrzeug, und ein Berechtigungssystem für Fahrzeuge mit mindestens einem Authentifikationselement. Ferner betrifft die Erfindung ein Verfahren zur Überprüfung einer von einem Nutzer beabsichtigten Autorisierungsanfrage an einem Authentifikationselement eines Fahrzeuges mit einem Berechtigungssystem.

Bekannte Berechtigungssysteme für Fahrzeuge, wie z. B. sog. passive schlüssellose Systeme oder sog. hands-free entry/go Systeme bzw. Keyless Entry Systeme, erfordern es nicht, ein Berechtigungsmittel bzw. einen Schlüssel in die Hand zu nehmen, um bestimmte Aktionen auszulösen.

So ist es mit derartigen Systemen beispielsweise möglich, ein Fahrzeug ohne aktive Benutzung eines Berechtigungsmittels bzw. Autoschlüssels zu entriegeln und durch das bloße Betätigen eines Startknopfes zu starten. Ermöglicht wird dies durch das Berechtigungsmittel bzw. einen Keyless-Entry-Schlüssel mit einem Chip, den der Nutzer mit sich führt.

Bei Systemen aus dem Stand der Technik sendet das Fahrzeug ein schwaches Signal mit einer Reichweite von wenigen Metern, das das Berechtigungsmittel empfängt. Das Berechtigungsmittel sendet daraufhin ein Signal an das Fahrzeug, das das Fahrzeug dazu benutzt, zu entscheiden, ob es sich um ein autorisiertes Berechtigungsmittel handelt und ob darauf basierend Zugangs- bzw. Fahrberechtigungsbefehle umgesetzt werden können.

Solche Berechtigungssysteme setzen also keine bewusste Nutzerinteraktion am Berechtigungsmittel mehr voraus, sondern überprüfen nur, ob das Berechtigungsmittel in den Momenten, in denen eine Überprüfung der Autorisierung erfolgen soll, in unmit-Im Kontext dieser Berechtigungs- bzw. Keyless Entry Systeme rücken Angriffsszenarien, die eben auf spezielle Eigenschaften der damit verbundenen Technologien zurückgreifen, in den Vordergrund.

So sind mittlerweile Angriffsszenarien bekannt, bei denen die zugehörige Funkstrecke des Berechtigungssystems bzw. die Funkstrecke zwischen Schlüssel und Fahrzeug verlängert wird. Hierbei handelt es sich um sog. Relaisangriffe bzw. relay station attacks (RSA).

Bei einem derartigen Relaisangriff wird das Signal des Fahrzeugs zum Berechtigungsmittel mittels eines Antennenpaares weitergeleitet bzw. verlängert. Dabei muss eine Antenne/eine Relaisstation nah (typsicherweise weniger als 2 Meter) am Fahrzeug sein und die andere Antenne/Relaisstation nah an dem autorisierten Berechtigungsmittel (typischerweise weniger als 2 Meter). Die Distanz zwischen den beiden Relaisstationen (Funkstreckenverlängerungsstationen) kann dabei sehr groß sein und ist lediglich abhängig von der konkreten Implementierung der Relaisstationen, deren Ziel typischerweise krimineller Natur ist und bei denen man auch nicht davon ausgehen kann, dass regulatorische Bestimmungen einschränkend wirken.

Folglich kann das Fahrzeug mittels eines Relaisangriffs geöffnet bzw. gestartet werden, obwohl sich das zugehörige Berechtigungsmittel außerhalb der üblichen Distanz für eine Öffnung bzw. Fahrberechtigung des Fahrzeugs befindet.

Es gibt sehr unterschiedliche technologische Ansätze, die eine RSA auf Keyless Entry Systeme erschweren oder gar unmöglich machen. Bislang wurde bei diesen Betrachtungen aber auf die hands-free Funktion abgestellt und nicht berücksichtigt, dass es neben der eigentlichen komfortgetriebenen hands-free Funktion gerade für die Funktion Fahrberechtigung eine Rückfalllösung ("Notstart") gibt. Diese soll sicherstellen, dass, wenn ein Berechtigungsmittel z. B. eine schwache/leere bzw. defekte Energieversorgung oder teilweise sogar weitere/andere Defekt aufweist, ein Starten eines Fahrzeuges dennoch möglich ist.

Diese Rückfalllösung ist typischerweise derart implementiert, dass man das Berechtigungsmittel an eine bestimmte Position innerhalb oder außerhalb des Fahrzeuges hält, an dem eine fahrzeugseitige RFID Transponderlesespule angeordnet ist.

Mit deren Hilfe wird das Berechtigungsmittel mit Energie versorgt und zwar über eine transformatorische Kopplung, sodass eine sog. challenge/response Kommunikation zwischen Fahrzeug und Berechtigungsmittel durchgeführt werden kann, mittels welcher überprüft wird, ob das Berechtigungsmittel für das Fahrzeug autorisiert ist.

Diese Notfunktion, also das Versorgen des Berechtigungsmittels mit Energie und eine Kommunikation zur Authentifizierung zwischen Berechtigungsmittel und Fahrzeug, wird auch Transponding genannt. Für Keyless Entry Systeme handelt es sich dabei also um eine Rückfalllösung bzw. den sogenannten Notstart.

Folglich existiert neben der eigentlichen Keyless Entry bzw. hands-free Funktion ein zweiter, paralleler Pfad, um Fahrberechtigung erlangen zu können. Dieser zweite Pfad gewährleistet eine Notstart-Funktionalität, die den Zweck hat, die Verfügbarkeit für z. B. die Funktion Fahrberechtigung sicherzustellen. Folglich ist es mittels genannter Notstart-Funktionalität beispielsweise möglich, mittels einer RSA Zugang zu einem Fahrzeug zu erlangen und dieses zu starten.

Der Erfindung liegt daher die Aufgabe zu Grunde, ein Authentifikationselement und ein Berechtigungssystem für Fahrzeuge anzugeben, bei denen mit geringem technischem Aufwand und auf einfache Weise eine Relaisattacke auf die Notstart-Funktion eines Fahrzeuges unterbunden werden kann.

Ferner liegt der Erfindung die Aufgabe zugrunde, ein Verfahren zur Überprüfung einer von einem Nutzer beabsichtigten Autorisierungsanfrage an einem Authentifikationselement eines Fahrzeuges mit einem Berechtigungssystem anzugeben, bei dem auf einfache Weise eine Relaisattacke auf die Notstart-Funktion eines Fahrzeuges unterbunden werden kann und welches idealerweise simpel aufgebaut ist, um einfach in bestehende Systeme integriert zu werden.

Beide Aufgaben werden erfindungsgemäß durch die Merkmale der unabhängigen Patentansprüche gelöst. Weitere vorteilhafte Weiterbildungen der vorliegenden Erfindung sind Gegenstand der Unteransprüche.

Bei einem ersten Aspekt der Erfindung ist es vorgesehen, dass ein Authentifikationselement, insbesondere ein Schlüssel oder ein Keyless-Go-Mittel für ein Fahrzeug, beispielsweise für ein Automobil, nachstehende Merkmale aufweist.

Dabei umfasst das Authentifikationselement eine Transpondingschnittstelle zum Übermitteln eines Authentifikationssignals und zum Empfangen von Energie und Daten. Somit ist es möglich, eine Funkverbindung aufzubauen und über diese nicht nur Authentifikationssignale zu versenden bzw. zu übermitteln, sondern auch Energie und Daten für das Authentifikationselement zu empfangen.

Ferner weist das Authentifikationselement ein Sensorelement zur Erfassung einer Bewegung und/oder Neigung auf. Mittels des Sensorelements kann auf einfache Weise eine Neigung und/oder Bewegung des Authentifikationselements erfasst werden.

Des Weiteren ist das Authentifikationselement so ausgebildet, dass Authentifikationssignale über die Transpondingschnittstelle übermittelt werden, wenn das Sensorelement eine hinterlegte Bewegung und/oder Neigung erfasst. Auf diese Weise wird also dann ein Authentifikationssignal von dem Authentifikationselement übermittelt, wenn eine bestimmte Bewegung und/oder Neigung des Authentifikationselements erfolgt ist.

Das Authentifikationselement ist so ausgebildet, dass Authentifikationssignale nur dann über die Transpondingschnittstelle übermittelt werden, wenn das Sensorelement eine hinterlegte Bewegung und/oder Neigung erfasst. Diese Ausgestaltung erlaubt es dem das Authentifikationselement nur dann Authentifikationssignale zu versenden bzw. zu übermitteln, wenn eine hinterlegte Bewegung und/oder Neigung vorliegt.

Es ist von Vorteil, wenn das Authentifikationselement eine Signalverarbeitungs- und -weiterleitungseinrichtung aufweist, die vorzugsweise mit der Transpondingschnittstelle und mit dem Sensorelement verbunden ist. Dies erlaubt es der Signalverarbeitungs- und -weiterleitungseinrichtung mit der Transpondingschnittstelle und dem Sensorelement zu kommunizieren bzw. deren Signale/Daten zu erfassen und vorzugsweise auszuwerten bzw. zu vergleichen.

Ferner ist es günstig, wenn im Authentifikationselement, insbesondere in der Signalverarbeitungs- und -weiterleitungseinrichtung, eine hinterlegte Bewegung und/oder Neigung zum Vergleichen hinterlegt ist. Dadurch kann z. B. die Signalverarbeitungs- und -weiterleitungseinrichtung durch Vergleich Entscheidungen treffen, von denen vorzugsweise das Übermitteln von Authentifikationssignalen abhängig ist. Die hinterlegte Bewegung und/oder Neigung kann dabei vorzugsweise von einer Programmiereinrichtung frei auf beliebige Werte eingestellt werden.

Bevorzugterweise erfasst die Signalverarbeitungs- und -weiterleitungseinrichtung die Bewegung und/oder Neigung des Sensorelements. Dadurch ist die Signalverarbeitungs- und -weiterleitungseinrichtung in der Lage, schnell und effektiv eine erfasste Bewegung und/oder Neigung mit z. B. einer hinterlegten zu vergleichen. Des Weiteren ist es bevorzugt, wenn die Signalverarbeitungs- und - weiterleitungseinrichtung Authentifikationssignale über die Transpondingschnittstelle übermittelt. Somit kann die Signalverarbeitungs- und -weiterleitungseinrichtung das Übermitteln von Authentifikationssignalen steuern und initiieren.

Auch ist es günstig, wenn die Authentifikationssignale eine an dem Sensorelement erfasste Bewegung und/oder Neigung umfassen. Auf diese Weise kann das Authentifikationselement Authentifikationssignale mit Informationen über das Sensorelement übermitteln. Dadurch wird ein spezieller Status des Authentifikationselements auf eine weitere Vorrichtung übertragbar, die diese Daten bzw. Signale auswerten kann, um beispielsweise eine Funktion, wie das Starten eines Fahrzeuges, auszuführen oder zu gestatten.

Vorteilhafterweise weist das Sensorelement des Authentifikationselements zur Erfassung einer Bewegung und/oder Neigung mindestens einen Beschleunigungssensor und/oder mindestens einen Neigungsmesser auf. Dies ermöglicht es dem Sensorelement, Beschleunigungen und somit auch Kräfte sowie die Neigung zu erfassen, wodurch die Bewegung und Lage des Authentifikationselements im Raum erfassbar ist.

Ferner ist es von Vorteil, wenn der mindestens eine Beschleunigungssensor eine lineare Beschleunigung in mindestens eine Raumrichtung erfasst. Vorzugsweise weist das Sensorelement drei Beschleunigungssensoren auf, die günstigerweise orthogonal zueinander angeordnet sind. Somit können Beschleunigungen im Raum und folglich die räumliche Bewegung des Beschleunigungssensors bzw. des Sensorelements erfasst werden.

Auch ist es bevorzugt, dass der mindestens eine Neigungsmesser eine Steigung oder einen Winkel in mindestens eine Raumrichtung erfasst. Vorzugsweise weist das Sensorelement drei Neigungsmesser auf, die bevorzugterweise orthogonal zueinander angeordnet sind. Dies erlaubt es, die Neigung bzw. das Gefälle bzw. die Steigung bzw. einen relativen Winkel eines Körpers in Bezug auf eine Ebene zu erfassen.

Des Weiteren ist es bevorzugt, dass die Signalverarbeitungs- und - weiterleitungseinrichtung so ausgebildet ist, dass die erfasste Bewegung und/oder Neigung mit der hinterlegte Bewegung und/oder Neigung verglichen wird. Dies erlaubt es der Signalverarbeitungs- und -weiterleitungseinrichtung in Abhängigkeit des Vergleiches bzw. der Werte eine Entscheidung, wie z. B. das Versenden von Authentifikationssignalen, zu treffen.

Ferner ist es bevorzugt, dass bei einem positiven Vergleich die Signalverarbeitungs- und -weiterleitungseinrichtung Authentifikationssignale über die Transpondingschnittstelle übermittelt. Somit können nun Authentifikationssignale von dem Authentifikationselement übermittelt bzw. versendet werden, um z. B. ein Fahrzeug erfolgreich zu starten.

Bei einem zweiten Aspekt der Erfindung ist es vorgesehen, ein Berechtigungssystem für Fahrzeuge mit mindestens einem Authentifikationselement und mit einer Vorrichtung anzugeben.

Für das Berechtigungssystem ist es vorgesehen, dass die Vorrichtung des Berechtigungssystems eine Leseeinrichtung zum Senden von Energie und Daten sowie zum Empfangen von Authentifikationssignalen aufweist. Die Leseeinrichtung erlaubt es eine Funkverbindung aufzubauen, wobei über diese nicht nur Daten und Energie versendet werden, sondern auch Authentifikationssignale erhalten werden können.

Die Vorrichtung ist fahrzeugseitig, insbesondere in oder an einem Automobil, angeordnet. Somit ist die Vorrichtung mit dem Fahrzeug verbunden und kann beispielsweise eingesetzt werden, dieses zu öffnen und/oder zu starten.

Ferner ist die Transpondingschnittstelle des Authentifikationselements an der Leseeinrichtung der Vorrichtung anordenbar, um Authentifikationssignale nach dem Empfang von Energie und Daten an die Leseeinrichtung zu übermitteln. Somit ist ein energieloses Authentifikationselement von extern mit Energie versorgbar und kann seine Tätigkeiten wieder aufnehmen.

Es ist von Vorteil, wenn die Vorrichtung so ausgebildet ist, dass nach Empfang von übermittelten Authentifikationssignalen eine Funktion aktiviert wird, insbesondere eine Fahrberechtigung erteilt wird. Vorteilhafterweise werden die Authentifikationssignale von dem Authentifikationselement übermittelt. Somit kann durch bloßes Empfangen von Authentifikationssignalen eine Fahrberechtigung erteilt werden. Dies ist insbesondere dann von Vorteil, wenn das Authentifikationselement so ausgebildet ist, dass dieses unter bestimmten Bedingungen Authentifikationssignale versendet bzw. übermittelt, wie dies beispielsweise unter dem ersten Aspekt beschrieben ist.

Auch ist es günstig, wenn das Authentifikationselement ausgebildet ist, Authentifikationssignale über die Transpondingschnittstelle zu übermitteln, die die Bewegung und/oder Neigung des Sensorelements umfassen. Dabei ist es von Vorteil, wenn die Vorrichtung vorzugsweise ausgebildet ist, die von dem Authentifikationselement übermittelten Authentifikationssignale mit hinterlegten Authentifikationssignalen zu vergleichen. Auf diese Weise kann die Vorrichtung eine Entscheidung auf Basis des Vergleiches treffen und beispielsweise bei positivem Vergleich eine Funktion, wie z. B. eine Fahrberechtigung für ein Fahrzeug, aktivieren. Somit trifft also im Gegensatz zur bereits vorgestellten Lösung die Vorrichtung die Entscheidung eine Funktion zu aktivieren bzw. eine Aktion durchzuführen und nicht das Authentifikationselement. Jedoch beruht die Entscheidung bei beiden Varianten auf der Auswertung der Bewegung und/oder Neigung des Sensorelements.

Des Weiteren ist es bevorzugt, dass die Vorrichtung eine Steuerungseinrichtung, insbesondere eine Funktionslogik zur Verarbeitung von Authentifikationssignalen aufweist, die vorzugsweise mit der Leseeinrichtung verbunden ist. Auf diese Weise wird es der Steuerungseinrichtung bzw. der Funktionslogik ermöglicht, die Leseeinrichtung zu steuern und anzuweisen. Ferner können somit die Aufgaben der Steuerungseinrichtung auf einzelne Teilelemente verteilt werden, die auf die jeweilige Aufgabe spezialisiert sind. Dadurch ist es möglich, einzelne Steuerungsaufgaben der Steuerungseinrichtung schneller und effektiver handzuhaben.

Ferner ist es von Vorteil, wenn in der Vorrichtung, insbesondere in der Funktionslogik, hinterlegte Authentifikationssignale zum Vergleichen hinterlegt sind. Dadurch können die in der Vorrichtung hinterlegten mit weiteren Authentifikationssignalen auf einfache Weise und schnell mithilfe der Funktionslogik verglichen werden.

Des Weiteren ist es bevorzugt, wenn die empfangenen und hinterlegten Authentifikationssignale eine von dem Sensorelement erfasste Bewegung und/oder Neigung umfassen.

Auch ist es günstig, wenn die Funktionslogik empfangene Authentifikationssignale mit hinterlegten Authentifikationssignalen vergleicht. Auf diese Weise können hinterlegte Signale mit den im Authentifikationselement erfassten bzw. übermittelten verglichen werden, wodurch in Abhängigkeit der Bewegung und/oder Neigung, beispielsweise Funktionen, wie das Erteilen einer Fahrberechtigung, freigegeben oder gesperrt werden können. Ander ausgedrückt, wird es dadurch möglich, dass die Vorrichtung entscheiden kann, ob eine Fahrberechtigung erteilt werden kann.

Damit die Neigung der Vorrichtung mit der Neigung des Authentifikationselements vergleich bar ist, ist es von Vorteil, wenn Vorrichtung eine Sensoreinrichtung zur Erfassung einer Neigung aufweist.

Des Weiteren ist es bevorzugt, dass die Steuerungseinrichtung, insbesondere die Funktionslogik, eine Neigung der Sensoreinrichtung erfasst. Somit kann auch die Vorrichtung die Neigung erfassen, wodurch die Lage der Vorrichtung im Raum bezüglich der Gravitationsachse erfassbar ist.

Vorzugsweise weist die Sensoreinrichtung mindestens einen Beschleunigungssensor und/oder mindestens einen Neigungsmesser auf. Diese konkrete Ausgestaltung erlaubt das Erfassen der Bewegung und Lage der Vorrichtung im dreidimensionalen Raum.

Ferner ist es von Vorteil, wenn der mindestens eine Beschleunigungssensor eine lineare Beschleunigung in mindestens eine Raumrichtung erfasst. Vorzugsweise weist die Sensoreinrichtung drei Beschleunigungssensoren auf, die günstigerweise orthogonal zueinander angeordnet sind. Somit können Beschleunigungen im Raum und folglich die räumliche Bewegung des Beschleunigungssensors erfasst werden.

Auch ist es bevorzugt, dass der mindestens eine Neigungsmesser eine Steigung oder einen Winkel in mindestens eine Raumrichtung erfasst. Vorzugsweise weist die Sensoreinrichtung drei Neigungsmesser aufweist, die bevorzugterweise orthogonal zueinander angeordnet sind. Dies erlaubt es, die Neigung bzw. das Gefälle bzw. die Steigung bzw. einen relativen Winkel eines Körpers in Bezug auf eine Ebene zu erfassen.

Bei einem dritten Aspekt der Erfindung ist es vorgesehen, ein Verfahren zur Überprüfung einer von einem Nutzer beabsichtigten Autorisierungsanfrage an einem Authentifikationselement eines Fahrzeuges mit einem Berechtigungssystem anzugeben, wobei das Berechtigungssystem mindestens ein Authentifikationselement und eine Vorrichtung umfasst.

Das Verfahren umfasst nachstehende Schritte:
Ein Schritt weist ein Anordnen des Authentifikationselements im Sende- und/oder Empfangsbereich der Leseeinrichtung der Vorrichtung auf. Somit kann das Authentifikationselement am Ort der Energieaufnahme platziert werden.

Ein weiterer Schritt weist ein Empfangen von Energie auf, wobei die Transpondingschnittstelle des Authentifikationselements Energie von der Leseeinrichtung der Vorrichtung empfängt. Dadurch kann das Authentifikationselement schnurlos mit Energie versorgt werden.

Ein weiterer Schritt weist ein Erfassen der Bewegung und/oder Neigung am Authentifikationselement durch das Sensorelement auf. In diesem Schritt wird vereinfacht ausgedrückt die räumliche Lage bzw. Position des Authentifikationselements erfasst bzw. gemessen und zur Verfügung gestellt.

Ein weiterer Schritt weist ein Erzeugen von Authentifikationssignalen auf, welche die erfasste Bewegung und/oder Neigung umfassen. Somit ist die erfasste Bewegung und/oder Neigung in Authentifikationssignale umgewandelbar, wodurch ein einfaches Übermitteln ermöglicht wird.

Ein weiterer Schritt weist ein Übermitteln der Authentifikationssignale von dem Authentifikationselement an die Vorrichtung auf. Dadurch gelangen die erfassten Authentifikationssignale zur Vorrichtung.

Ein weiterer Schritt weist ein Vergleichen der erfassten bzw. übermittelten Authentifikationssignale mit hinterlegten Authentifikationssignalen auf. Mithilfe des Vergleichs kann eine Entscheidung durch das Verfahren bzw. durch die das Verfahren ausführende Vorrichtung getroffen werden, ob eine Funktion, insbesondere eine Fahrberechtigung, erteilt werden kann oder verwehrt bleibt.

Bei nachfolgendem Schritt Vergleichen ist es von Vorteil, wenn dieser alternativ zu den Schritten Erfassen, Übermitteln und Vergleichen ausgeführt wird.

Der bevorzugte alternative Schritt weist im Authentifikationselement ein Vergleichen der erfassten Bewegung und/oder Neigung mit einer hinterlegten Bewegung und/oder Neigung auf, wobei bei einem positiven Vergleich ein Übermitteln von Authentifikationssignalen von dem Authentifikationselement an die Vorrichtung initiiert wird. Auf diese Weise wird also nach einem erfolgreichen Vergleich der erfassten Bewegung und/oder Neigung mit einer hinterlegten Bewegung und/oder Neigung eine Entscheidung getroffen, die - falls positiv - zur Übermittlung bzw. zum Übermitteln von Authentifikationssignalen führt.

Des Weiteren ist es von Vorteil, wenn das Erfassen der Bewegung und/oder Neigung ein Erfassen durch die Signalverarbeitungs- und -weiterleitungseinrichtung des Authentifikationselements umfasst. Dadurch ist die Signalverarbeitungs- und - weiterleitungseinrichtung in der Lage die Schritte Vergleichen und Erfassen durchzuführen, wodurch beide Schritte auf einfache und effektive Weise realisierbar sind.

Bevorzugterweise sind die hinterlegten Authentifikationssignale in der Signalverarbeitungs- und -weiterleitungseinrichtung des Authentifikationselements hinterlegt. Auf diese Weise ist es dem Authentifikationselement möglich, aus einem Vergleich eine Entscheidung für das weitere Verfahren treffen zu können.

Ferner ist es bevorzugt, dass die hinterlegten Authentifikationssignale in der Funktionslogik der Vorrichtung hinterlegt sind. Auf diese Weise kann die Effektivität der Vorrichtung weiter gesteigert werden, um ein Vergleichen und Erfassen schnell und effizient durchzuführen.

Auch ist es bevorzugt, dass bei einem positiven Vergleich die erfassten Authentifikationssignale mit den hinterlegten Authentifikationssignalen übereinstimmen. Auch hier ist es der Funktionslogik auf einfache Weise möglich, Authentifikationssignale auf Echtheit zu prüfen.

Es wird darauf hingewiesen, dass "übereinstimmen" der Authentifikationssignale in dem Sinne zu verstehen ist, dass die Vorrichtung bzw. die Funktionslogik der Steuerungseinrichtung unter anderem aus dem übermittelten Authentifikationssignalen erkennt, dass eine Bewegung und/oder Neigung am Authentifikationselement tatsächlich stattfindet bzw. vorliegt oder innerhalb eines kleinen bestimmbaren Zeitraumes stattgefunden hat.

Ferner ist es bevorzugt, dass die Funktionslogik die Authentifikationssignale des Authentifikationselements mit den hinterlegten Authentifikationssignalen der Vorrichtung vergleicht. Somit kann auf einfache Weise eine Verifikation der Authentifikationssignale in der Vorrichtung vorgenommen werden, wodurch in logischer Konsequenz auch die Vorrichtung in der Lage ist, eine Entscheidung bzw. eine Verifikation der Signale vorzunehmen.

Des Weiteren ist es günstig, wenn die Signalverarbeitungs- und - weiterleitungseinrichtung die erfasste Bewegung und/oder Neigung mit der hinterlegten Bewegung und/oder Neigung vergleicht. Dies erlaubt es dem Authentifikationselement zu entscheiden, ob Authentifikationssignale übermittelt werden, um somit eine Überprüfung einer von einem Nutzer beabsichtigten Autorisierungsanfrage an einem Authentifikationselement eines Fahrzeuges abzuschließen.

Auch ist es bevorzugt, wenn die Signalverarbeitungs- und -weiterleitungseinrichtung über eine Funkverbindung von Transpondingschnittstelle und Leseeinrichtung Authentifikationssignale an die Funktionslogik der Vorrichtung übermittelt. Auf diese Weise kann die Vorrichtung die Überprüfung einer von einem Nutzer beabsichtigten Autorisierungsanfrage an einem Authentifikationselement eines Fahrzeuges erkennen und diese erfolgreich zum Abschluß bringen oder eben nicht.

Vorteilhafterweise umfasst der Schritt des Übermittelns der Authentifikationssignale eine Verschlüsselung und/oder Komprimierung der Authentifikationssignale. Somit ist ein weiterer Schutzmechanismus gegen Manipulation in das erfindungsgemäße Verfahren implementierbar.

Das zuvor vorgestellt Verfahren sowie das Authentifikationselement und das Berechtigungssystem beschäftigten sich insbesondere mit dem Schutz einer sog. Notstart-Funktion eines Fahrzeuges. Die Notstart-Funktion ist in Fahrzeugen mit Keyless-Entry Systemen zu finden.

Hier wird in dem Fall, dass einem Authentifikationselement bzw. einem Keyless-Entry Schlüssel keine Energie zum Senden und Empfangen von Signalen hat, die sog. Notstart-Funktion zur Verfügung gestellt, bei welcher das Authentifikationselement über einen Transpondingvorgang, wie z. B. bei einem RFID Chip, mit Energie versorgt wird.

Da das Fahrzeug bzw. dessen Steuerung nicht zwischen einem tatsächlichen Notstart, bei dem z. B. die Batterie des Authentifikationselements leer ist, und einem Angriff auf die Notstart-Funktion unterscheiden kann, würde das Fahrzeug mit einem Berechtigungssystem aus dem Stand starten und somit eine Fahrberechtigung erteilen.

Hingegen zielt die vorgestellte Erfindung darauf ab, Angriffe auf die Notstart-Funktion zu unterbinden und eventuelle Notstart-Szenarien zu erkennen, um nur dem Besitzer eines Fahrzeuges eine Fahrberechtigung erteilen zu können.

Es wird ferner darauf hinweisen, dass oben geschilderte Aspekte auch für herkömmliche Funkschlüssel geeignet sind, die keine Keyless-Entry Funktionalität aufweisen.

So kann die vorgestellte Erfindung vorzugsweise auch für herkömmliche Funkschlüssel verwendet werden, wobei diese dann vorteilhafterweise nicht für eine Notstart-Funktion zum Einsatz kommt, sondern dem Entsperren einer Wegfahrsperre dient. Folglich dienen oben vorgestellte drei Aspekte, vereinfacht dargestellt, bei einem herkömmlichen Funkschlüssel ohne Keyless-Entry Funktion als Diebstahlschutz.

Insbesondere eignet sich die Drehbewegung für das Anlassen eines Fahrzeuges, die mit einem herkömmlichen Funkschlüssel unternommen wird, dazu, die gewünschte Information über die Bewegung und/oder Neigung des Schlüssels zu erzeugen und zu vergleichen.

In diesem Zusammenhang ergeben sich also für Nutzer eines herkömmlichen Funkschlüssels keine weiteren Unannehmlichkeiten, zugleich aber ist die in der Regel technisch passiv ausgelegte Transpondingfunktion gegen einen RSA-Angriff geschützt.

Nachstehend wird die Erfindung anhand von Ausführungsbeispielen in Verbindung mit zugehörigen Zeichnungen näher erläutert. Diese zeigen schematisch:
- **Fig. 1**: ein Berechtigungssystem mit einem Authentifikationselement und mit einer Vorrichtung; und
- **Fig. 2**: ein Verfahren zur Überprüfung einer von einem Nutzer beabsichtigten Autorisierungsanfrage an einem Authentifikationselement.

In nachfolgender Beschreibung werden gleiche Bezugszeichen für gleiche Gegenstände verwendet.

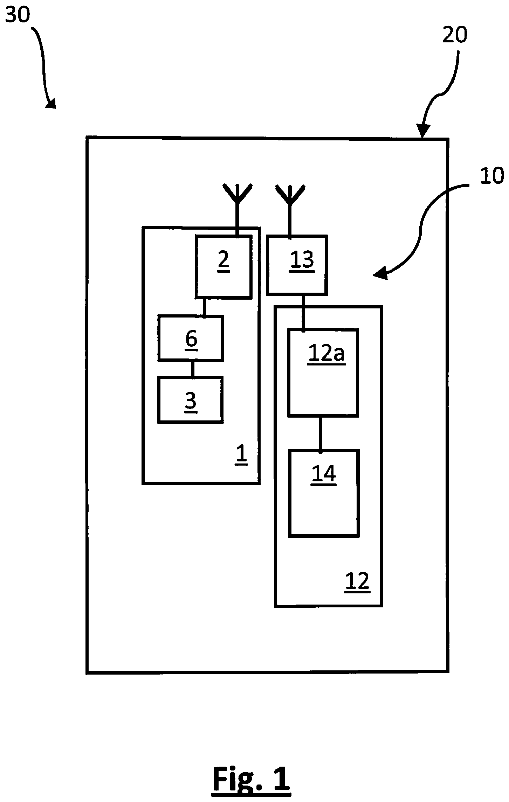

**Fig. 1** zeigt ein Berechtigungssystem 30 für ein Fahrzeug 20, das ein Authentifikationselement 1 und eine Vorrichtung 10 aufweist.

Das Authentifikationselement 1 ist im vorliegenden Beispiel als Schlüssel oder Keyless-Go-Mittel für das Fahrzeug 20 ausgestaltet und weist eine Transpondingschnittstelle 2 zum Senden/Übermitteln von Authentifikationssignalen und zum Empfangen von Energie und Daten auf. Die auf der Transpondingschnittstelle 2 dargestellte Antenne stellt das Senden/Empfangen lediglich bildlich dar.

Des Weiteren hat das Authentifikationselement 1 eine Signalverarbeitungs- und - weiterleitungseinrichtung 6. Diese ist sowohl mit der Transpondingschnittstelle 2 als auch mit einem Sensorelement 3 zur Erfassung einer Bewegung und/oder Neigung verbunden.

Das Sensorelement 3 weist zum Erfassen einer Bewegung und/oder Neigung einen nicht dargestelltenBeschleunigungssensor und/oder Neigungsmesser auf.

In der Signalverarbeitungs- und -weiterleitungseinrichtung 6 des Authentifikationselements 1 ist eine hinterlegte Bewegung und/oder Neigung zum Vergleichen mit einer gemessenen bzw. erfassten Bewegung und/oder Neigung hinterlegt.

Die Signalverarbeitungs- und -weiterleitungseinrichtung 6 ist ferner so ausgebildet, dass diese die erfasste Bewegung und/oder Neigung mit der hinterlegten Bewegung und/oder Neigung vergleicht, wobei bei einem positiven Vergleich die Signalverarbeitungs- und -weiterleitungseinrichtung 6 Authentifikationssignale über die Transpondingschnittstelle 2 übermittelt. Hierbei können die Authentifikationssignale eine von dem Sensorelement 3 erfasste Bewegung und/oder Neigung umfassen, wodurch diese beispielsweise zu der Vorrichtung 10 übermittelbar ist.

Vereinfacht dargestellt, ist das Authentifikationselement 1 so ausgebildet ist, dass Authentifikationssignale über die Transpondingschnittstelle 2 übermittelt werden, wenn das Sensorelement 3 eine Bewegung und/oder Neigung erfasst, die einer hinterlegten Bewegung und/oder Neigung entspricht.

Die Vorrichtung 10 des Berechtigungssystems 30 ist fahrzeugseitig, also in dem Fahrzeug 20 angeordnet, und weist eine Leseeinrichtung 13 zum Senden von Energie und Daten sowie zum Empfangen eines Authentifikationssignals auf.

Des Weiteren zeigt Fig. 1, dass die Transpondingschnittstelle 2 des Authentifikationselements 1 an der Leseeinrichtung 13 der Vorrichtung 10 angeordnet ist, um Authentifikationssignale nach dem Empfang von Energie und Daten an die Leseeinrichtung 13 zu übermitteln. Die auf der Leseeinrichtung 13 dargestellte Antenne stellt das Senden/Empfangen lediglich bildlich dar.

Vereinfacht dargestellt, ist die Vorrichtung 10 so ausgebildet ist, dass nach Empfang von übermittelten Authentifikationssignalen von dem Authentifikationselement 1 eine Funktion aktiviert wird, insbesondere eine Fahrberechtigung erteilt wird.

Die Vorrichtung 10 weist dabei eine Steuerungseinrichtung 12 mit einer Funktionslogik 12a zur Verarbeitung von Authentifikationssignalen auf, die mit der Leseeinrichtung 13 verbunden ist. Ferner weist die Vorrichtung 10 eine Sensoreinrichtung 14 mit einem Neigungsmesser auf. Dieser dient dazu, die Neigung der Vorrichtung zu erfassen und diese Neigung bei dem Vergleich von hinterlegten und erfassten Authentifikationssignalen bzw. von erfasster Bewegung und/oder Neigung mit der hinterlegten Bewegung und/oder Neigung zu berücksichtigen.

Zusammengefasst kann also nach Übermitteln von Authentifikationssignalen von dem Authentifikationselement 1 zur Vorrichtung 10 über eine Funkverbindung von Leseeinrichtung 13 und Transpondingschnittstelle 2 die Funktionslogik 12a beispielsweise eine Fahrberechtigung für das Fahrzeug 20 erteilen.

Bei einer alternativen Ausgestaltung ist das Authentifikationselement 1 ausgebildet, Authentifikationssignale über die Transpondingschnittstelle 2 zu übermitteln, die die Bewegung und/oder Neigung des Sensorelements 3 umfassen.

Ferner ist die Vorrichtung 10 ausgebildet, die von dem Authentifikationselement 1 übermittelten Authentifikationssignale mit hinterlegten Authentifikationssignalen zu vergleichen und bei positivem Vergleich eine Funktion zu aktivieren.

Hierzu sind in der Funktionslogik 12a Authentifikationssignale zum Vergleichen hinterlegt. Somit können also empfangene und hinterlegte Authentifikationssignale verglichen werden. Der Vollständigkeit halber sei explizit erwähnt, dass in dieser Alternative die übermittelten und hinterlegten Authentifikationssignale eine von dem Sensorelement 3 erfasste Bewegung und/oder Neigung umfassen.

Selbstverständlich ist es auch möglich, beide vorgenannten Ausführungen miteinander zu kombinieren.

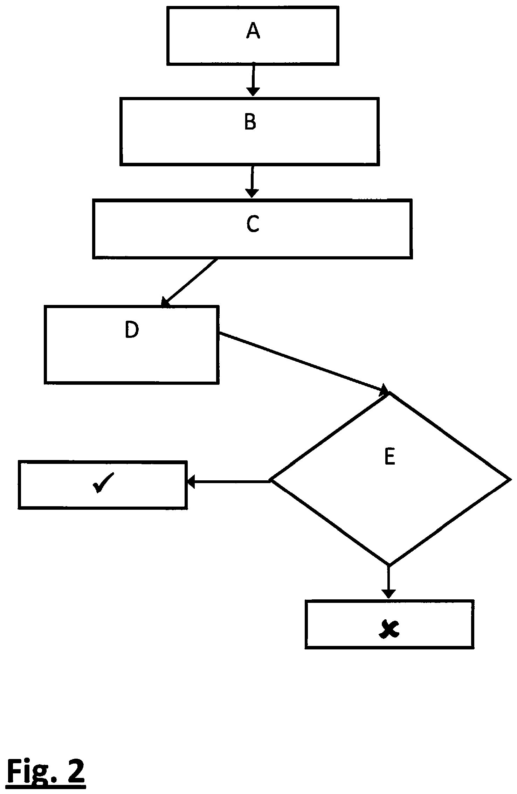

**Fig. 2** zeigt ein Verfahren zur Überprüfung einer von einem Nutzer beabsichtigten Autorisierungsanfrage an einem Authentifikationselement 1. Diese Überprüfung findet insbesondere im Rahmen einer sog. Notstart-Funktion statt. Diese ist in Fahrzeugen mit Keyless-Entry Systemen zu finden.

Hier wird in dem Fall, dass einem Authentifikationselement bzw. einem Keyless-Entry Schlüssel keine Energie zum Senden und Empfangen von Signalen hat, die sog. Notstart-Funktion zur Verfügung gestellt, bei welcher das Authentifikationselement über einen Transpondingvorgang, wie z. B. bei einem RFID Chip, mit Energie versorgt wird.

Da das Fahrzeug 20 bzw. dessen Steuerungseinrichtung 12 nicht zwischen einem tatsächlichen Notstart, bei dem z. B. die Batterie des Authentifikationselements 1 leer ist, und einem Angriff auf die Notstart-Funktion unterscheiden kann, würde das Fahrzeug 20 mit einem Berechtigungssystem aus dem Stand der Technik starten und somit eine Fahrberechtigung erteilen. Ein derartiger Angriff wird hier erkannt und vermieden. Auch kann es sich um einen Angriff auf die Wegfahrsperre handeln.

Nach dem Anordnen des Authentifikationselements 1 im Sende- und Empfangsbereich der Leseeinrichtung 13 der Vorrichtung 10 in Schritt A, wird in Schritt B Energie empfangen. Hierbei empfängt die Transpondingschnittstelle 2 des Authentifikationselements 1 Energie von der Leseeinrichtung 13 der Vorrichtung 10. Dies geschieht über das sog. Transponding, bei dem Energie von einem zum anderen über z. B. Magnetfelder übertragen wird, ähnlich wie bei einem RFID Chip.

Im Anschluss ist das Authentifikationselement 1 mittels der Signalverarbeitungs- und - weiterleitungseinrichtung 6 in Schritt C in der Lage, eine Bewegung und/oder Neigung des Sensorelements 3 des Authentifikationselements 1 zu erfassen und Authentifikationssignale zu erzeugen, die die erfasste Bewegung und/oder Neigung beinhalten.

In Schritt D werden die erzeugten Authentifikationssignale von dem Authentifikationselement 1 an die Vorrichtung 10 übermittelt, um diese erzeugten bzw. erfassten Authentifikationssignale in Schritt E mit hinterlegten Authentifikationssignalen in der Funktionslogik 12a der Vorrichtung 10 zu vergleichen. Da die Vorrichtung 10 bzw. das Fahrzeug 20 auf einer schiefen Ebene stehen kann, weist die Vorrichtung 10 eine Sensoreinrichtung 14 mit einem Neigungsmesser auf, der bezüglich der Neigung die hinterlegten Authentifikationssignale um die vorliegende Neigung anpassen kann. Somit sind also die hinterlegten Authentifikationssignale um eine Neigung des Fahrzeuges anpassbar, um z. B. ein zulässiges Winkelfenster beim Authentifikationselement möglichst klein zu halten. Dies ist also notwendig, da ansonsten ein Fahrzeug, geparkt an z. B. einem Berg oder Hang, nicht gestartet werden könnte.

Bei einem positiven Vergleich der erfassten Authentifikationssignale mit den hinterlegten Authentifikationssignalen bzw. wenn beide Signale übereinstimmen, wird in Schritt F die Fahrberechtigung erteilt bzw. das Fahrzeug 20 gestartet. Auch ist die Deaktivierung einer Wegfahrsperre möglich.

Es wird darauf hingewiesen, dass Übereinstimmen der Authentifikationssignale in dem Sinne zu verstehen ist, dass die Vorrichtung 10 unter anderem erkennt, dass eine bestimmte Bewegung und/oder Neigung am Authentifikationselement tatsächlich vorliegt bzw. gegeben ist.

In einem alternativen Verfahren sind die Schritte A und B zu obigen Verfahren identisch, wobei sich die nachfolgenden Schritte unterscheiden.

So wird in Schritt C, die Bewegung und/oder Neigung des Sensorelements 3 des Authentifikationselements 1 durch die Signalverarbeitungs- und - weiterleitungseinrichtung 6 erfasst und mit einer hinterlegten Bewegung und/oder Neigung verglichen, wobei bei einem positiven Vergleich ein Übermitteln von Authentifikationssignalen von dem Authentifikationselement 1 an die Vorrichtung 10 initiiert wird.

Die hinterlegte Bewegung und/oder Neigung ist in der Signalverarbeitungs- und - weiterleitungseinrichtung 6 des Authentifikationselements 1 hinterlegt, wobei die Signalverarbeitungs- und -weiterleitungseinrichtung 6 die erfasste Bewegung und/oder Neigung mit der hinterlegten Bewegung und/oder Neigung vergleicht. Ferner liegt ein positiver Vergleich vor, wenn die erfasste Bewegung und/oder Neigung der hinterlegten Bewegung und/oder Neigung entspricht.

Sobald diese Bedingung gegeben ist, übermittelt die Signalverarbeitungs- und - weiterleitungseinrichtung 6 über eine Funkverbindung von Transpondingschnittstelle 2 und Leseeinrichtung 13 Authentifikationssignale an die Funktionslogik 12a der Vorrichtung 10. Dies erlaubt es eine Fahrberechtigung freizuschalten und das Fahrzeug 20 zu starten.

Während also, vereinfacht dargestellt, im ersten vorgestellten Verfahren die Vorrichtung 10 entscheidet, ob eine Fahrberechtigung erteilt werden kann, geschieht dies im zweiten vorgestellten Verfahren durch das bzw. im Authentifikationselement 1. Im zweiten Fall liegt bereits dann eine Fahrberechtigung vor, wenn das Authentifikationssignal von der Vorrichtung empfangen wird.

Betreffend beide vorgestellten Verfahrens-Varianten kann der Schritt des Übermittelns der Authentifikationssignale eine Verschlüsselung und/oder Komprimierung der Authentifikationssignale umfassen. Dies erhöht die Sicherheit der Übertragung.

Mit anderen Worten kann die Erfindung beispielhaft auch auf nachstehende Art wiedergegeben bzw. kurz zusammengefasst werden.

Ein Nutzer sitzt in einem Cafe in beliebiger Entfernung von seinem Fahrzeug und hat sein Authentifikationselement 1 bzw. seinen Keyless Entry Schlüssel in der Jackentasche oder Laptoptasche.

Im nachfolgenden wird ein Angriff via Funkstreckenverlängerung (RSA) auf die Notstartfunktion des Fahrzeuges bzw. des Authentifikationselements unternommen.

Ein Angreifer hat sich bereits Zugang zum Fahrzeug verschafft und wünscht dieses nun zu starten. Hierzu drückt den Start-Knopf des Fahrzeugs. Da das Fahrzeug kein gültiges Authentifikationselement im Fahrzeug detektiert, wird es dem Angreifer die Möglichkeit anbieten, einen Notstart zu machen, weil die Batterie des Authentifikationselements leer sein könnte.

Hierzu wird fahrzeugseitig ein Transponding initiiert, bei dem der Angreifer bzw. auch der tatsächliche Nutzer sein beispielsweise energieloses Authentifikationselement an eine bestimmte Stelle im Fahrzeug hält bzw. in ein spezielles Ablagefach legt. Durch transformatorische Kopplung wird das Authentifikationselement nun mit Energie versorgt, so dass das Authentifikationselement eine sog. response zu der neben der Energie nun ebenfalls empfangenen sog. challenge berechnen und ans Fahrzeug zurücksenden kann.

Mit einer eigenen Vorrichtung empfängt der Angreifer im Fahrzeug nun die vom Fahrzeug erzeugten Signale (im Wesentlichen die sog. challenge). Über einen beliebigen Kommunikationskanal werden diese Signale zu einem zweiten Angreifer transferiert, der sich in der Nähe des originalen Authentifikationselements befindet - also in genanntem Cafe.

Dieser zweite Angreifer hat eine Vorrichtung bei sich, mit der nun die identischen Signale erzeugt werden, die das Fahrzeug gesendet hat. Das Authentifikationselement empfängt diese Signale und wechselt nun in einen Transpondingmodus/Notstartmodus, weil es nicht erkennen kann, ob es sich hierbei um einen Angriff handelt oder nicht.

In Implementierungen aus dem Stand der Technik würde das Authentifikationselement nun mit der sog. response antworten, die der zweite Angreifer an den Angreifer im Fahrzeug weiterreichen könnte, um die Signale nachzubilden, so dass das Fahrzeug ein gültiges Authentifikationselement erkennt und also eine Fahrberechtigung erteilen würde. Das wäre ein gelungener RSA Angriff auf die Notstartfunktion, vorbei an jedwedem Schutz gegen RSA, der sich auf die Kernfunktion der hands-free Funktion bezieht.

Nach dem erfindungsgemäßen Verfahren geschieht stattdessen folgendes:
Das Authentifikationselement wechselt - wie bereits beschrieben - in den Transponding/Notstartmodus oder einen Wegfahrsperrenmodus und empfängt also die sog. challenge, die in diesem Fall von einem Angreifer kommt.

Das Authentifikationselement sendet mit seiner response auch seine Lage verschlüsselt an das Fahrzeug. Das Fahrzeug überprüft, ob die Lageinformation des Authentifikationselements mit der Geometrie bzw. der Lage des Zündschlosses und der realen Endposition des Zündschalters übereinstimmt.

Da das Fahrzeug eventuell an einem Berg/Hang parken könnte, wird vorzugsweise die Neigung des Fahrzeugs gegen die Gravitationsachse bei der Überprüfung berücksichtigt, um das zulässige Winkelfenster beim Original-Authentifikationselement möglichst klein zu halten.

Selbst wenn das Original-Authentifikationselement zufällig die gleiche Position haben sollte (was bereits sehr unwahrscheinlich ist), so würde in einer weiteren Sicherheitsstufe beispielsweise ein zweites Transponding vom Fahrzeug durchgeführt, nachdem das Authentifikationselement von einer Endposition beim Startvorgang in die normale Fahrstellung zurückgeführt wurde.

Das Authentifikationselement müsste also genau diesen Winkelversatz erfahren, damit der Angriff erfolgreich sein könnte. Das setzt aber den Besitz des Authentifikationselements voraus. Ein Angriff kann also erfolgreich abgewehrt werden.

### Bezugszeichenliste

- 1: Authentifikationselement
- 2: Transpondingschnittstelle
- 3: Sensorelement

- 6: Signalverarbeitungs- und -weiterleitungseinrichtung

- 10: Vorrichtung

- 12: Steuerungseinrichtung
- 12a: Funktionslogik
- 13: Leseeinrichtung
- 14: Sensoreinrichtung
- 20: Fahrzeug
- 30: Berechtigungssystem

## Patentansprüche

1. Authentifikationselement (1), ausgebildet als Schlüssel oder als Keyless-Go-Mittel für ein Fahrzeug (20),
mit dessen Hilfe eine Relaisattacke auf eine Notstart-Funktion eines Fahrzeuges unterbindbar ist,
bei der ein Versorgen des Authentifikationselements (1) mit Energie und eine Kommunikation zur Authentifikation zwischen dem Authentifikationselement (1) und einer Vorrichtung eines Fahrzeugs (20), auch Transponding genannt, erfolgt, wobei das Authentifikationselement (1) umfasst:
• eine Transpondingschnittstelle (2) zum Übermitteln eines Authentifikationssignals und zum Empfangen von Energie und Daten, um eine Funkverbindung aufzubauen und über diese nicht nur Authentifikationssignale zu übermitteln, sondern auch Energie und Daten für das Authentifikationselement (1) von einer fahrzeugseitigen Vorrichtung (10) zu empfangen, und
• ein Sensorelement (3) zur Erfassung einer Bewegung und/oder Neigung,
• wobei das Authentifikationselement (1) so ausgebildet ist, dass Authentifikationssignale über die Transpondingschnittstelle (2) übermittelt werden, wenn das Sensorelement (3) eine hinterlegte Bewegung und/oder Neigung erfasst.

2. Authentifikationselement nach Anspruch 1,
- wobei das Authentifikationselement (1) eine Signalverarbeitungs- und -weiterleitungseinrichtung (6) aufweist,
- wobei vorzugsweise die Signalverarbeitungs- und - weiterleitungseinrichtung (6) mit der Transpondingschnittstelle (2) und mit dem Sensorelement (3) verbunden ist,
- wobei vorzugsweise die Signalverarbeitungs- und - weiterleitungseinrichtung (6) die Bewegung und/oder Neigung des Sensorelements (3) erfasst,
- wobei vorzugsweise im Authentifikationselement (1), insbesondere in der Signalverarbeitungs- und -weiterleitungseinrichtung (6), eine hinterlegte Bewegung und/oder Neigung zum Vergleichen hinterlegt ist,
- wobei vorzugsweise die Signalverarbeitungs- und - weiterleitungseinrichtung (6) Authentifikationssignale über die Transpondingschnittstelle (2) übermittelt,
- wobei vorzugsweise die Authentifikationssignale eine an dem Sensorelement (3) erfasste Bewegung und/oder Neigung umfassen.

3. Authentifikationselement nach Anspruch 1 oder 2,
- wobei das Sensorelement (3) des Authentifikationselements (1) zur Erfassung einer Bewegung und/oder Neigung mindestens einen Beschleunigungssensor und/oder mindestens einen Neigungsmesser aufweist,
- wobei vorzugsweise die Signalverarbeitungs- und - weiterleitungseinrichtung (6) so ausgebildet ist, dass die erfasste Bewegung und/oder Neigung mit der hinterlegten Bewegung und/oder Neigung verglichen wird,
- wobei vorzugsweise bei einem positiven Vergleich die Signalverarbeitungs- und -weiterleitungseinrichtung (6) Authentifikationssignale über die Transpondingschnittstelle (2) übermittelt.

4. Berechtigungssystem (30) für Fahrzeuge mit mindestens einem Authentifikationselement (1) nach einem der Ansprüche 1 bis 3 und mit einer Vorrichtung (10), die fahrzeugseitig angeordnet ist,
- wobei die Vorrichtung (10) eine Leseeinrichtung (13) zum Senden von Energie und Daten sowie zum Empfangen von Authentifikationssignalen aufweist,
- wobei die Transpondingschnittstelle (2) des Authentifikationselements (1) an der Leseeinrichtung (13) der Vorrichtung (10) anordenbar ist, um Authentifikationssignale nach dem Empfang von Energie und Daten an die Leseeinrichtung (13) zu übermitteln, und
- wobei vorzugsweise die Vorrichtung (10) so ausgebildet ist, dass nach Empfang von übermittelten Authentifikationssignalen eine Funktion aktiviert wird, insbesondere eine Fahrberechtigung erteilt wird.

5. Berechtigungssystem nach Anspruch 4,
- wobei alternativ zu Anspruch 1 das Authentifikationselement (1) ausgebildet ist, Authentifikationssignale über die Transpondingschnittstelle (2) zu übermitteln, die die Bewegung und/oder Neigung des Sensorelements (3) umfassen, und
- wobei alternativ zu Anspruch 4 die Vorrichtung (10) ausgebildet ist, die von dem Authentifikationselement (1) übermittelten Authentifikationssignale mit hinterlegten Authentifikationssignalen zu vergleichen und bei positivem Vergleich eine Funktion zu aktivieren.

6. Berechtigungssystem nach Anspruch 4 oder 5,
- wobei die Vorrichtung (10) eine Steuerungseinrichtung (12), insbesondere eine Funktionslogik (12a) zur Verarbeitung von Authentifikationssignalen aufweist, die vorzugsweise mit der Leseeinrichtung (13) verbunden ist,
- wobei vorzugsweise in der Vorrichtung (10), insbesondere in der Funktionslogik (12a), hinterlegte Authentifikationssignale zum Vergleichen hinterlegt sind,
- wobei vorzugsweise die empfangenen und hinterlegten Authentifikationssignale eine von dem Sensorelement (3) erfasste Bewegung und/oder Neigung umfassen,
- wobei vorzugsweise die Funktionslogik (12a) empfangene Authentifikationssignale mit hinterlegten Authentifikationssignalen vergleicht,
- wobei vorzugsweise die Vorrichtung (10) eine Sensoreinrichtung (14) zur Erfassung einer Neigung aufweist,
- wobei vorzugsweise die Steuerungseinrichtung (12), insbesondere die Funktionslogik (12a), eine Bewegung und/oder Neigung der Sensoreinrichtung (14) erfasst
- wobei vorzugsweise die Sensoreinrichtung (14) mindestens einen Beschleunigungssensor und/oder mindestens einen Neigungsmesser aufweist.

7. Verfahren zur Überprüfung einer von einem Nutzer beabsichtigten Autorisierungsanfrage an einem Authentifikationselement (1) eines Fahrzeuges mit einem Berechtigungssystem (30) nach einem der Ansprüche 4 bis 6, wobei das Verfahren nachfolgende Schritte aufweist:
- Anordnen des Authentifikationselements (1) im Sende- und Empfangsbereich der Leseeinrichtung (13) der Vorrichtung (10),
- Empfangen von Energie, wobei die Transpondingschnittstelle (2) des Authentifikationselements (1) Energie von der Leseeinrichtung (13) der Vorrichtung (10) empfängt,
- Erfassen der Bewegung und/oder Neigung am Authentifikationselement (1) durch das Sensorelement (3),
- Erzeugen von Authentifikationssignalen, welche die erfasste Bewegung und/oder Neigung umfassen,
- Übermitteln der Authentifikationssignale von dem Authentifikationselement (1) an die Vorrichtung (10), und
- Vergleichen der erfassten Authentifikationssignale mit hinterlegten Authentifikationssignalen.

8. Verfahren nach Anspruch 7,
wobei nachfolgender Schritt alternativ zu den Schritten Erzeugen, Übermitteln und Vergleichen ausgeführt wird:
- im Authentifikationselement (1) Vergleichen der erfassten Bewegung und/oder Neigung mit einer hinterlegten Bewegung und/oder Neigung, wobei bei einem positiven Vergleich ein Übermitteln von Authentifikationssignalen von dem Authentifikationselement (1) an die Vorrichtung (10) initiiert wird.

9. Verfahren nach einem der Ansprüche 7 oder 8,
- wobei das Erfassen der Bewegung und/oder Neigung ein Erfassen durch die Signalverarbeitungs- und -weiterleitungseinrichtung (6) des Authentifikationselements (1) umfasst,
- wobei vorzugsweise die hinterlegten Authentifikationssignale in der Signalverarbeitungs- und -weiterleitungseinrichtung (6) des Authentifikationselements (1) hinterlegt sind,
- wobei vorzugsweise die hinterlegten Authentifikationssignale in der Funktionslogik (12a) der Vorrichtung (10) hinterlegt sind,
- wobei vorzugsweise bei einem positiven Vergleich die erfassten Authentifikationssignale mit den hinterlegten Authentifikationssignalen übereinstimmen.

10. Verfahren nach einem der Ansprüche 7 bis 9,
- wobei die Funktionslogik (12a) die Authentifikationssignale des Authentifikationselements (1) mit den hinterlegten Authentifikationssignalen der Vorrichtung (10) vergleicht,
- wobei vorzugsweise die Signalverarbeitungs- und - weiterleitungseinrichtung (6) die erfasste Bewegung und/oder Neigung mit der hinterlegten Bewegung und/oder Neigung vergleicht,
- wobei vorzugsweise die Signalverarbeitungs- und - weiterleitungseinrichtung (6) über eine Funkverbindung von Transpondingschnittstelle (2) und Leseeinrichtung (13) Authentifikationssignale an die Funktionslogik (12a) der Vorrichtung (10) übermittelt,
- wobei vorzugsweise der Schritt des Übermittelns der Authentifikationssignale eine Verschlüsselung und/oder Komprimierung der Authentifikationssignale umfasst.

## Claims

1. Authentication element (1), in the form of a key or a Keyless Go means for a vehicle (20),
which can be used to prevent a relay attack on an emergency start function of a vehicle,
in which the authentication element (1) is supplied with energy and communication for authentication takes place between the authentication element (1) and an apparatus of a vehicle (20), also called transponding,
wherein the authentication element (1) comprises:
• a transponding interface (2) for transmitting an authentication signal and for receiving energy and data in order to set up a radio connection and to not only transmit authentication signals but also to receive energy and data for the authentication element (1) from an apparatus (10) in the vehicle via said radio connection, and
• a sensor element (3) for capturing a movement and/or inclination,
• wherein the authentication element (1) is designed in such a manner that authentication signals are transmitted via the transponding interface (2) if the sensor element (3) captures a stored movement and/or inclination.

2. Authentication element according to Claim 1,
- wherein the authentication element (1) has a signal processing and forwarding device (6),
- wherein the signal processing and forwarding device (6) is preferably connected to the transponding interface (2) and to the sensor element (3),
- wherein the signal processing and forwarding device (6) preferably captures the movement and/or inclination of the sensor element (3),
- wherein a stored movement and/or inclination is preferably stored for comparison in the authentication element (1), in particular in the signal processing and forwarding device (6),
- wherein the signal processing and forwarding device (6) preferably transmits authentication signals via the transponding interface (2),
- wherein the authentication signals preferably comprise a movement and/or inclination captured at the sensor element (3).

3. Authentication element according to Claim 1 or 2,
- wherein the sensor element (3) of the authentication element (1) has, for capturing a movement and/or inclination, at least one acceleration sensor and/or at least one inclinometer,
- wherein the signal processing and forwarding device (6) is preferably designed in such a manner that the captured movement and/or inclination is compared with the stored movement and/or inclination,
- wherein the signal processing and forwarding device (6) preferably transmits authentication signals via the transponding interface (2) in the case of a positive comparison.

4. Authorization system (30) for vehicles, having at least one authentication element (1) according to one of Claims 1 to 3 and having an apparatus (10) which is arranged in the vehicle,
- wherein the apparatus (10) has a reading device (13) for transmitting energy and data and for receiving authentication signals,
- wherein the transponding interface (2) of the authentication element (1) can be arranged on the reading device (13) of the apparatus (10) in order to transmit authentication signals to the reading device (13) after receiving energy and data, and
- wherein the apparatus (10) is preferably designed in such a manner that, after receiving transmitted authentication signals, a function is activated, in particular a driving authorization is granted.

5. Authorization system according to Claim 4,
- wherein, as an alternative to Claim 1, the authentication element (1) is designed to transmit authentication signals via the transponding interface (2), which signals comprise the movement and/or inclination of the sensor element (3), and
- wherein, as an alternative to Claim 4, the apparatus (10) is designed to compare the authentication signals transmitted by the authentication element (1) with stored authentication signals and to activate a function in the case of a positive comparison.

6. Authorization system according to Claim 4 or 5,
- wherein the apparatus (10) has a control device (12), in particular a functional logic unit (12a) for processing authentication signals, which is preferably connected to the reading device (13),
- wherein authentication signals stored in the apparatus (10), in particular in the functional logic unit (12a), are preferably stored for comparison,
- wherein the received and stored authentication signals preferably comprise a movement and/or inclination captured by the sensor element (3),
- wherein the functional logic unit (12a) preferably compares received authentication signals with stored authentication signals,
- wherein the apparatus (10) preferably has a sensor device (14) for capturing an inclination,
- wherein the control device (12), in particular the functional logic unit (12a), preferably captures a movement and/or inclination of the sensor device (14),
- wherein the sensor device (14) preferably has at least one acceleration sensor and/or at least one inclinometer.

7. Method for checking an authorization request intended by a user at an authentication element (1) of a vehicle having an authorization system (30) according to one of Claims 4 to 6, wherein the method has the following steps of:
- arranging the authentication element (1) in the transmitting and receiving range of the reading device (13) of the apparatus (10),
- receiving energy, wherein the transponding interface (2) of the authentication element (1) receives energy from the reading device (13) of the apparatus (10),
- capturing the movement and/or inclination at the authentication element (1) by means of the sensor element (3),
- generating authentication signals which comprise the captured movement and/or inclination,
- transmitting the authentication signals from the authentication element (1) to the apparatus (10), and
- comparing the captured authentication signals with stored authentication signals.

8. Method according to Claim 7,
wherein the following step is carried out as an alternative to the generating, transmitting and comparing steps:
- comparing the captured movement and/or inclination with a stored movement and/or inclination in the authentication element (1), wherein transmission of authentication signals from the authentication element (1) to the apparatus (10) is initiated in the case of a positive comparison.

9. Method according to either of Claims 7 and 8,
- wherein the capture of the movement and/or inclination comprises capture by means of the signal processing and forwarding device (6) of the authentication element (1),
- wherein the stored authentication signals are preferably stored in the signal processing and forwarding device (6) of the authentication element (1),
- wherein the stored authentication signals are preferably stored in the functional logic unit (12a) of the apparatus (10),
- wherein the captured authentication signals preferably correspond to the stored authentication signals in the case of a positive comparison.

10. Method according to one of Claims 7 to 9,
- wherein the functional logic unit (12a) compares the authentication signals from the authentication element (1) with the stored authentication signals from the apparatus (10),
- wherein the signal processing and forwarding device (6) preferably compares the captured movement and/or inclination with the stored movement and/or inclination,
- wherein the signal processing and forwarding device (6) preferably transmits authentication signals to the functional logic unit (12a) of the apparatus (10) via a radio connection of the transponding interface (2) and the reading device (13),
- wherein the step of transmitting the authentication signals preferably comprises encryption and/or compression of the authentication signals.

## Revendications

1. Élément d'authentification (1) réalisé sous forme de clé ou de moyen de démarrage sans clé de type Keyless-Go pour un véhicule (20),
à l'aide duquel une attaque en relais sur une fonction de démarrage d'urgence d'un véhicule peut être supprimée,
dans lequel une alimentation de l'élément d'authentification (1) en énergie et une communication pour l'authentification entre l'élément d'authentification (1) et un dispositif d'un véhicule (20), également appelé transpondeur, ont lieu, l'élément d'authentification (1) comprenant :
• une interface de transpondeur (2) pour transmettre un signal d'authentification et pour recevoir de l'énergie et des données, afin d'établir une liaison radio et, par le biais de celle-ci, non seulement de transmettre des signaux d'authentification, mais également de recevoir de l'énergie et des données pour l'élément d'authentification (1), depuis un dispositif côté véhicule (10), et
• un élément de capteur (3) pour détecter un mouvement et/ou une inclinaison,
• dans lequel l'élément d'authentification (1) est réalisé de telle sorte que des signaux d'authentification soient transmis par le biais de l'interface de transpondeur (2), lorsque l'élément de capteur (3) détecte un mouvement et/ou une inclinaison enregistrés.

2. Élément d'authentification selon la revendication 1,
- dans lequel l'élément d'authentification (1) présente un dispositif de traitement et de transfert de signaux (6),
- dans lequel, de préférence, le dispositif de traitement et de transfert de signaux (6) est relié à l'interface de transpondeur (2) et à l'élément de capteur (3),
- dans lequel, de préférence, le dispositif de traitement et de transfert de signaux (6) détecte le mouvement et/ou l'inclinaison de l'élément de capteur (3),
- dans lequel, de préférence, un mouvement et/ou une inclinaison enregistrés est enregistré à des fins de comparaison dans l'élément d'authentification (1), en particulier dans le dispositif de traitement et de transfert de signaux (6),
- dans lequel, de préférence, le dispositif de traitement et de transfert de signaux (6) transmet des signaux d'authentification par le biais de l'interface de transpondeur (2),
- dans lequel, de préférence, les signaux d'authentification comprennent un mouvement et/ou une inclinaison détectés au niveau de l'élément de capteur (3).

3. Élément d'authentification selon la revendication 1 ou 2,
- dans lequel l'élément de capteur (3) de l'élément d'authentification (1) présente, pour détecter d'un mouvement et/ou d'une inclinaison, au moins un capteur d'accélération et/ou au moins un dispositif de mesure d'inclinaison,
- dans lequel, de préférence, le dispositif de traitement et de transfert de signaux (6) est réalisé de telle sorte que le mouvement et/ou l'inclinaison détectés soient comparés avec le mouvement et/ou l'inclinaison enregistrés,
- dans lequel, de préférence, en cas de comparaison positive, le dispositif de traitement et de transfert de signaux (6) transmet des signaux d'authentification par le biais de l'interface de transpondeur (2).

4. Système d'autorisation (30) pour des véhicules comprenant au moins un élément d'authentification (1) selon l'une quelconque des revendications 1 à 3 et comprenant un dispositif (10) qui est disposé du côté du véhicule,
- dans lequel le dispositif (10) présente un dispositif de lecture (13) pour envoyer de l'énergie et des données ainsi que pour recevoir des signaux d'authentification,
- dans lequel l'interface de transpondeur (2) de l'élément d'authentification (1) peut être disposée au niveau du dispositif de lecture (13) du dispositif (10), afin de transmettre des signaux d'authentification au dispositif de lecture (13) après la réception d'énergie et de données, et
- dans lequel, de préférence, le dispositif (10) est réalisé de telle sorte qu'après la réception de signaux d'authentification transmis, une fonction soit activée, en particulier une autorisation de conduite soit délivrée.

5. Système d'autorisation selon la revendication 4,
- dans lequel, en variante de la revendication 1, l'élément d'authentification (1) est réalisé pour transmettre des signaux d'authentification par le biais de l'interface de transpondeur (2), lesquels comprennent le mouvement et/l'inclinaison de l'élément de capteur (3), et
- dans lequel, en variante de la revendication 4, le dispositif (10) est réalisé pour comparer les signaux d'authentification transmis par l'élément d'authentification (1) avec des signaux d'authentification enregistrés et, en cas de comparaison positive, pour activer une fonction.

6. Système d'autorisation selon la revendication 4 ou 5,
- dans lequel le dispositif (10) présente un dispositif de commande (12), en particulier une logique de fonction (12a) pour traiter des signaux d'authentification, lequel est de préférence relié au dispositif de lecture (13),
- dans lequel, de préférence, des signaux d'authentification enregistrés dans le dispositif (10), en particulier dans la logique de fonction (12a), sont enregistrés à des fins de comparaison,
- dans lequel, de préférence, les signaux d'authentification reçus et enregistrés comprennent un mouvement et/ou une inclinaison détectés par l'élément de capteur (3),
- dans lequel, de préférence, la logique de fonction (12a) compare des signaux d'authentification reçus avec des signaux d'authentification enregistrés,
- dans lequel, de préférence, le dispositif (10) présente un dispositif de capteur (14) pour détecter une inclinaison,
- dans lequel, de préférence, le dispositif de commande (12), en particulier la logique de fonction (12a), détecte un mouvement et/ou une inclinaison du dispositif de capteur (14),
- dans lequel, de préférence, le dispositif de capteur (14) présente au moins un capteur d'accélération et/ou au moins un dispositif de mesure d'inclinaison.

7. Procédé pour contrôler une demande d'autorisation provenant d'un utilisateur à un élément d'authentification (1) d'un véhicule comprenant un système d'autorisation (30) selon l'une quelconque des revendications 4 à 6, dans lequel le procédé présente les étapes suivantes :
- agencement de l'élément d'authentification (1) dans la plage d'émission et de réception du dispositif de lecture (13) du dispositif (10),
- réception d'énergie, dans lequel l'interface de transpondeur (2) de l'élément d'authentification (1) reçoit de l'énergie du dispositif de lecture (13) du dispositif (10),
- détection du mouvement et/ou de l'inclinaison au niveau de l'élément d'authentification (1) par l'élément de capteur (3),
- génération de signaux d'authentification qui comprennent le mouvement et/ou l'inclinaison détectés,
- transmission des signaux d'authentification de l'élément d'authentification (1) au dispositif (10), et
- comparaison des signaux d'authentification détectés avec des signaux d'authentification enregistrés.

8. Procédé selon la revendication 7,
dans lequel l'étape suivante est mise en œuvre en variante des étapes de génération, transmission et comparaison :
- dans l'élément d'authentification (1), comparaison du mouvement et/ou de l'inclinaison détectés avec un mouvement et/ou une inclinaison enregistrés, dans lequel, en cas de comparaison positive, une transmission de signaux d'authentification par l'élément d'authentification (1) au dispositif (10) est amorcée.

9. Procédé selon l'une quelconque des revendications 7 et 8,
- dans lequel la détection du mouvement et/ou de l'inclinaison comprend une détection par le dispositif de traitement et de transfert de signaux (6) de l'élément d'authentification (1),
- dans lequel, de préférence, les signaux d'authentification enregistrés sont enregistrés dans le dispositif de traitement et de transfert de signaux (6) de l'élément d'authentification (1),
- dans lequel, de préférence, les signaux d'authentification enregistrés sont enregistrés dans la logique de fonction (12a) du dispositif (10),
- dans lequel, de préférence, en cas de comparaison positive, les signaux d'authentification détectés coïncident avec les signaux d'authentification enregistrés.

10. Procédé selon l'une quelconque des revendications 7 à 9,
- dans lequel la logique de fonction (12a) compare les signaux d'authentification de l'élément d'authentification (1) avec les signaux d'authentification enregistrés du dispositif (10),
- dans lequel, de préférence, le dispositif de traitement et de transfert de signaux (6) compare le mouvement et/ou l'inclinaison détectés avec le mouvement et/ou l'inclinaison enregistrés,
- dans lequel, de préférence, le dispositif de traitement et de transfert de signaux (6) transmet, par le biais d'une liaison radio depuis l'interface de transpondeur (2) et le dispositif de lecture (13), des signaux d'authentification à la logique de fonction (12a) du dispositif (10),
- dans lequel, de préférence, l'étape de transmission des signaux d'authentification comprend un cryptage et/ou une compression des signaux d'authentification.
